# EUROPÄISCHE PATENTSCHRIFT

(11) **EP 1 315 923 B1**
(45) Veröffentlichungstag und Bekanntmachung des Hinweises auf die Patenterteilung: **16.06.2004**
(21) Anmeldenummer: 01960722.5
(22) Anmeldetag: 04.09.2001
(51) Int. Cl.: F16H 63/30, F16H 3/38

(54) **HANDSCHALTGETRIEBE FÜR NUTZFAHRZEUGE**
MANUALLY OPERATED GEAR BOX FOR COMMERCIAL VEHICLES
BOITE DE VITESSE MANUELLE DESTINEE A DES VEHICULES UTILITAIRES

(30) Priorität: 09.09.2000 DE 10044602
(43) Veröffentlichungstag der Anmeldung: 04.06.2003
(73) Patentinhaber: ZF FRIEDRICHSHAFEN AG, 88038 Friedrichshafen (DE)
(72) Erfinder: FÜHRER, Gerhard, 88048 Friedrichshafen (DE)
(86) Internationale Anmeldenummer: PCT/EP2001/010147
(87) Internationale Veröffentlichungsnummer: WO 2002/021024

(56) Entgegenhaltungen:
- EP-A- 0 459 859
- EP-A- 1 022 495
- DE-C- 4 410 048
- US-A- 4 964 505
- PATENT ABSTRACTS OF JAPAN vol. 1998, no. 01, 30. Januar 1998 (1998-01-30) & JP 09 236178 A (SUZUKI MOTOR CORP), 9. September 1997 (1997-09-09)

## Beschreibung

Die vorliegende Erfindung betrifft ein Handschaltgetriebe für Nutzfahrzeuge, das eine Vielzahl von synchronisierten Vorwärtsgängen und einen nicht-synchronisierten Rückwärtsgang und gegebenenfalls einen nicht-synchronisierten Crawler-Gang aufweist, nach dem Oberbegriff des Anspruchs 1.

Handschaltgetriebe mit Synchronisiereinrichtungen sind vielfältig bekannt. So beschreibt beispielsweise das Buch von Johannes Looman "Zahnradgetriebe", 1970, ab Seite 259 Synchronisiereinrichtungen für Schaltgetriebe mit einem drehfest auf einer Getriebewelle angeordneten Synchronkörper, der am Umfang eine Außenverzahnung und mehrere, gleichmäßig verteilte Längsnuten aufweist, wobei in die Außenverzahnung des Synchronkörpers eine Innenverzahnung einer Schiebemuffe und in die Längsnuten Druckstücke eingreifen, wobei über eine radial äußere Fläche eines jeden in dem Synchronkörper eingesetzten Druckstückes ein durch eine Druckfeder vorgespanntes kugelförmiges, mit einer Ausnehmung der Schiebemuffe zusammenwirkendes Rastelement vorsteht und wobei die Druckstücke mit zumindest einem, eine konische Reibfläche und eine Sperrverzahnung aufweisenden Synchronring zusammenwirken.

Bei dieser Sperrsynchronisierung dienen die in den Längsnuten des Synchronkörpers angeordneten Druckstücke während eines Schaltvorgangs zum Ansynchronisieren, d.h. zur Bewegung des jeweiligen Synchronringes gegen eine Reibfläche des benachbarten Kupplungskörpers. Tritt bei einem Hochschaltvorgang oder einer Rückschaltung eine Drehzahldifferenz zwischen dem Kupplungskörper und dem Synchronkörper auf, so verhindert eine Sperrverzahnung des Synchronringes eine Bewegung der Innenverzahnung der Schiebemuffe in eine Kuppelverzahnung des Kupplungskörpers. Jedes der Druckstücke stützt sich über einen Rastbolzen an einer Druckfeder ab, die wiederum an ihrem Ende von einer Sackbohrung des Synchronkörpers aufgenommen wird. Der Rastbolzen weist ein kugeliges Ende auf und verrastet somit die Schiebemuffe in ihrer Neutralstellung in einer Nut. Bei jeder Schaltung wird die Druckfeder auf Biegung belastet, da die Schiebemuffe das Druckstück gemeinsam mit dem Rastbolzen in ihrer axialen Richtung verlagert, während das gegenüberliegende Ende der Druckfeder in einem festen Aufnahmeteil des Synchronkörpers geführt ist. In dem Moment, in dem Gleichlauf zwischen den rotierenden Teilen erzielt wird, läßt sich die Schiebemuffe weiter bewegen, wobei der Rastbolzen aus der Nut der Schiebemuffe verdrängt wird und somit zusätzlich zu der Biegung der Druckfeder auch noch deren Druckbelastung eintritt. Diese Belastungen können jedoch auf Dauer zum Bruch der Druckfeder führen.

Ferner wird bei dieser bekannten Synchronisiereinrichtung die Kuppelverzahnung der Schiebemuffe an der Sperrverzahnung des Synchronringes so lange gesperrt, wie zwischen dem Synchronkörper und dem Zahnrad noch kein Gleichlauf erzielt ist. Derartige Einrichtungen sind für den Fahrer sehr günstig, weil sie eine relativ geringe Aufmerksamkeit in bezug auf das Schalten erfordern. Sie weisen jedoch noch den Nachteil auf, dass die Reibeinrichtung infolge der vorkommenden hohen Differenzdrehzahlen und der oft aufgewendeten hohen Schaltkräfte überbelastet werden und damit schnell verschleißen und vorzeitig ganz ausfallen kann. Insbesondere bei Schaltungen in den Rückwärtsgang bei noch vorwärts rollendem Fahrzeug sind relativ hohe Differenzdrehzahlen zu synchronisieren, sodass die Synchronisiereinrichtungen für eine solche Schaltung besonders gefährdet sind.

Um diese Nachteile zu vermeiden, wurde bereits in der EP B1 302 857 der Anmeldering eine Sperrsynchronisiereinrichtung für Getriebeschaltungen vorgeschlagen, bei welcher ein Schiebemuffenträger und ein mit unterschiedlicher Drehzahl rotierendes Zahnrad mit Hilfe einer axial verschiebbaren ringförmigen Schiebemuffe bei Gleichlauf formschlüssig zusammengekuppelt werden, wobei eine Kuppelverzahnung der Schiebemuffe in je eine entsprechende Außenverzahnung des Schiebemuffenträgers und der Kuppelverzahnung des Zahnrades eingreift, mit zwischen Schiebemuffenträger und Schiebemuffe angeordneten Druckbolzen, die im nicht gekuppelten Zustand in eine Ausnehmung an der Innenseite der Schiebemuffe eingreifen und Druckflächen aufweisen, die mit Druckflächen an einem Synchronring in Wirkverbindung stehen, welche axial zwischen dem Schiebemuffenträger und dem Zahnrad angeordnet ist und mit dem Schiebemuffenträger in beiden Umfangsrichtungen über Anschläge mit Umfangsspiel in Mitnahmeverbindung steht. Bei noch bestehender Differenzdrehzahl zwischen dem Zahnrad und dem Schiebemuffenträger wird die Sperrwirkung der Sperrzähne begrenzt, sodass über die Kuppelverzahnung der Schiebemuffe bei deren Axialbewegung die Sperrzähne am Synchronring in Umfangsrichtung gegenüber dem Schiebemuffenträger verdreht werden, wobei die Begrenzung der Sperrwirkung durch Verringerung des Reibmomentes infolge der Erwärmung des Synchronringes und/oder einer geeigneten Gestaltung der Reibflächen und/oder einer Erhöhung der Entsperrkraft durch die Gestaltung der Sperrflächen erfolgt.

Mit dieser bekannten Sperrsynchronisiereinrichtung werden normale, also zugelassene Schaltungen auch in den Rückwärtsgang bewältigt, ohne dass eine Zerstörung der Synchronisierung durch Überbelastung möglich ist. Ist jedoch die Vorwärtsfahrt und damit die Differenzdrehzahl zwischen Schiebemuffe und Zahnrad noch zu hoch, so entsteht beim versuchten Einspuren der Stirnverzahnung der Schiebemuffe in die Kuppelverzahnung des Zahnrades ein gewolltes Ratschgeräusch, sodass der Fahrer die Schaltung nicht oder nur stark verzögert vollendet, wodurch verhindert wird, dass beim Einkuppeln des Motors infolge der Drehzahlumkehr dieser beschädigt wird.

Bei Handschaltgetrieben für Nutzfahrzeuge, die eine Vielzahl von Vorwärtsgängen und einen Rückwärtsgang sowie gegebenenfalls einen Crawler-Gang aufweisen, sind üblicherweise sämtliche Vorwärtsgänge synchronisiert, wohingegen der Rückwärtsgang und der Crawler-Gang nicht synchronisiert sind. Dies ist beispielsweise bei den von der Anmelderin hergestellten Getrieben mit der Bezeichnung ECOSPLIT bzw. ECOMID der Fall. Zum Einlegen des Rückwärtsganges oder des Crawler-Ganges müssen daher die rotierenden Massen des Getriebes bei stillstehendem Fahrzeug von Motorleerlaufdrehzahl bis auf "0" abgebremst werden, bevor diese Gänge ratschfrei eingelegt werden können. Bei reibungsarm ausgeführten Getrieben kann dabei die Auslaufzeit bis zu 20 Sekunden betragen. Erst dann ist ein ratschfreies Einschalten des Rückwärtsganges oder Crawler-Ganges möglich. Diese Wartezeit wird als Beeinträchtigung des Schaltkomforts bei der Bedienung der mit diesen Getrieben ausgerüsteten Fahrzeuge empfunden.

Aufgabe der vorliegenden Erfindung ist es, ein Handschaltgetriebe für Nutzfahrzeuge derart auszugestalten, dass ein schnelleres Einlegen des nicht-synchronisierten Rückwärtsganges bzw. Crawler-Ganges ermöglicht wird.

Ausgehend von einem Handschaltgetriebe der eingangs näher genannten Art erfolgt die Lösung dieser Aufgabe mit den im kennzeichnenden Teil des Anspruchs angegebenen Merkmal; vorteilhafte Ausgestaltungen sind in den Unteransprüchen beschrieben.

Erfindungsgemäß ist also vorgesehen, dass die Schaltschiene für den nicht-synchronisierten Gang mit einem Rastenteil versehen ist, das derart angeordnet ist, dass es bei Wählen des nicht synchronisierten Ganges kraftfrei in die benachbarte Schaltschiene für einen der synchronisierten Vorwärtsgänge eingreift, sodass diese in Schaltrichtung kraftschlüssig mitgenommen wird und dadurch ein Ansynchronisieren des der benachbarten Schaltschiene zugeordneten Vorwärtsganges erfolgt, ein Durchschalten dieses Vorwärtsganges jedoch durch eine Sperreinrichtung verhindert wird.

Dadurch wird ein schnelleres Einlegen des unsynchronisierten Rückwärtsganges oder Crawler-Ganges und zwar durch Ansynchronisieren eines anderen Synchronpaketes ermöglicht. Das erfindungsgemäß vorgesehene Rastenteil dringt beim Wählen der Rückwärtsgang-Gasse bzw. der Crawler-Gang-Gasse derart in die Vorwärtsgangschiene kraftfrei ein, dass sie in Schaltrichtung mitgenommen wird. Das bei einem Handschaltgetriebe der eingangs näher genannten Art vorhandene Sperrblech, das ein Einlegen von zwei Gängen gleichzeitig verhindert und das der benachbarten Schaltschiene für den Vorwärtsgang zugeordnet ist, wird derart modifiziert, dass in Rückwärtsgang-Schaltrichtung das Ansynchronisieren des Vorwärtsganges ermöglicht, jedoch ein Durchschalten verhindert wird. Selbstverständlich ist das Rastenteil auf die Bedingungen der zu verzögernden Massen und der gewünschten Verzögerungszeit auszulegen.

Im folgenden wird die Erfindung anhand der Zeichnung näher erläutert, in der ein vorteilhaftes Ausführungsbeispiel im Zusammenhang mit einem nicht-synchronisierten Rückwärtsgang dargestellt ist.
Es zeigen:

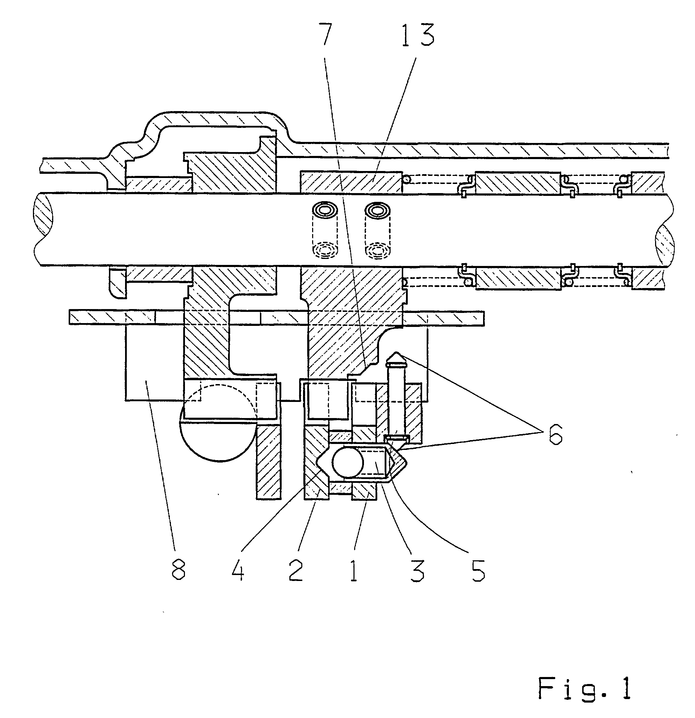

- Fig. 1: einen Teilschnitt durch ein erfindungsgemäß ausgestaltetes Handschaltgetriebe vor dem Ansynchronisieren;

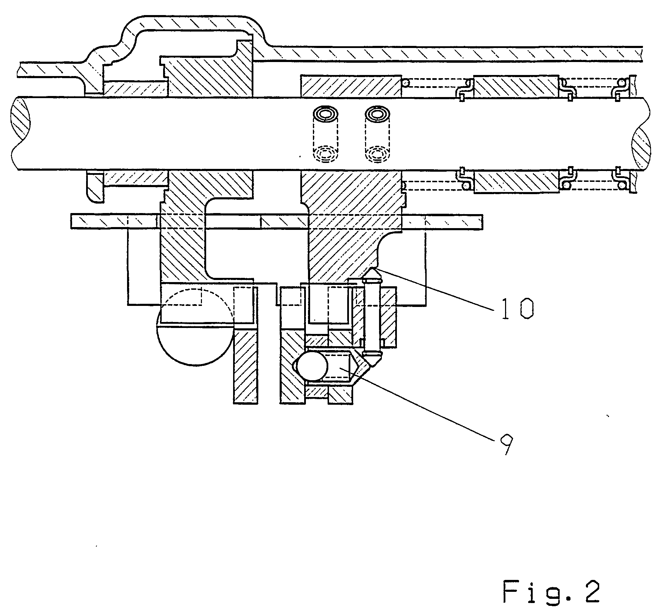

- Fig. 2: diese Teilansicht nach dem Ansynchronisieren und

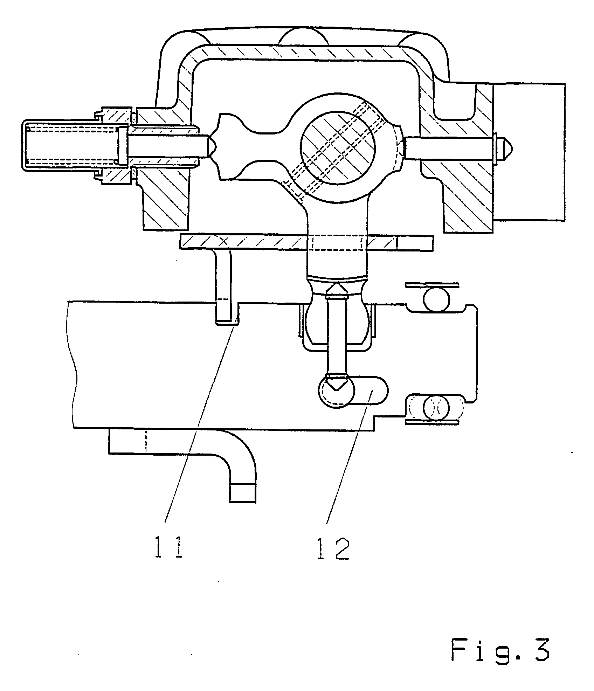

- Fig. 3: einen um 90° dazu versetzten Teilschnitt durch das Handschaltgetriebe.

In den Figuren und in den nachfolgenden Beschreibungen sind nur die für das Verständnis der Erfindung wesentlichen Bauteile dargestellt und beschrieben, da Handschaltgetriebe dem Fachmann bestens bekannt sind.

In den drei Figuren, in den gleiche Teile mit gleichen Bezugszeichen zu sehen sind, bedeuten
- 1: die Schaltschiene für den nicht-synchronisierten Rückwärtsgang
- 2: die Schaltschiene für einen synchronisierten Vorwärtsgang
- 3: ein gefesseltes Rastenteil
- 4: eine Rastenkontur in der Schaltschiene für den synchronisierten Vorwärtsgang
- 5: ein Rastenbolzen
- 6: eine Steuerkontur am Rastenbolzen
- 7: eine Steuerkontur am Schaltmitnehmer 13
- 8: ein Sperrblech
- 9: ein elastisches Bauteil im Rastenteil 3
- 10: eine Kontur am Schaltmitnehmer 13 zur formschlüssigen Aufnahme der Rastenkraft
- 11: eine verbreiterte Sperrnut in der Schaltschiene 2 für den synchronisierten Vorwärtsgang in Schaltrich tung des Rückwärtsganges
- 12: eine angepaßte Rastenkontur in der Schaltschiene für den synchronisierten Vorwärtsgang, damit die Hilfssynchronisierung nur in der Stellung Rückwärtsgang eingelegt wirksam ist. Die Rastenkontur ist dann erforderlich, wenn der Rückwärtsgang einem synchronisierten Gang, beispielsweise dem ersten Gang, als Paket mit derselben Schaltschiene gegenüberliegt.

Mit der erfindungsgemäßen Ausgestaltung des Handschaltgetriebes wird ein schnelleres Einlegen des unsynchronisierten Rückwärtsganges oder des Crawler-Ganges durch Ansynchronisieren eines anderen Synchronpaketes ermöglicht, wobei letzteres im dargestellten Ausführungsbeispiel das Synchronpaket der der Schaltschiene für den Rückwärtsgang 1 benachbarten Schaltschiene 2 eines synchronisierten Vorwärtsganges ist. Beim Wählen der Gasse für den Rückwärtsgang dringt das Rastenteil 3 derart in die Schaltschiene 2 für den synchronisierten Vorwärtsgang kraftfrei ein, dass sie in Schaltrichtung mitgenommen wird. Das bei einem Handschaltgetriebe bereits vorhandene Sperrblech 8, das ein Einlegen von zwei Gängen gleichzeitig verhindert, ist bei der benachbarten Schaltschiene derart modifiziert, dass in Rückwärtsgang-Schaltrichtung ein Ansynchronisieren des Vorwärtsganges ermöglicht, sein Durchschalten jedoch verhindert wird. Das Rastenteil 3 ist dabei auf die Abmessungen der zu verzögernden Massen auszulegen.

### Bezugszeichen

- 1: Schaltschiene Rückwärtsgang
- 2: Schaltschiene Vorwärtsgang
- 3: Rastenteil
- 4: Rastenkontur in der Schaltschiene 2
- 5: Rastenbolzen
- 6: Steuerkontur
- 7: Steuerkontur
- 8: Sperrblech
- 9: elastisches Teil
- 10: Kontur
- 11: Sperrnut
- 12: Rastenkontur
- 13: Schaltmitnehmer

## Patentansprüche

1. Handschaltgetriebe für Nutzfahrzeuge, das eine Vielzahl von synchronisierten Vorwärtsgängen und einen nicht-synchronisierten Rückwärtsgang und gegebenenfalls einen nicht-synchronisierten Crawler-Gang aufweist, wobei die Synchronisierung der Vorwärtsgänge mittels an Schaltschienen angeordneten Synchronpaketen erfolgt, und wobei den Schaltschienen Sperrbleche zugeordnet sind, die das gleichzeitige Einlegen von zwei Vorwärtsgängen verhindern, **dadurch gekennzeichnet, dass** die Schaltschiene (1) für den nicht-synchronisierten Gang mit einem Rastenteil (3) versehen ist, das derart angeordnet ist, dass es beim Wählen des nicht synchronisierten Ganges kraftfrei in die benachbarte Schaltschiene (2) für einen der synchronisierten Vorwärtsgänge eingreift, sodass diese in Schaltrichtung mitgenommen wird und dadurch ein Ansynchronisieren des der benachbarten Schaltschiene (2) zugeordneten Vorwärtsganges erfolgt, ein Durchschalten dieses Vorwärtsganges jedoch verhindert wird.

2. Handschaltgetriebe nach Anspruch 1, **dadurch gekennzeichnet, dass** das Rastenteil (3) mit einem elastischem Element (9) versehen ist und dass die Schaltschiene (2) mit einer Rastenkontur (4) versehen ist.

3. Handschaltgetriebe nach einem der vorhergehenden Ansprüche, **dadurch gekennzeichnet, dass** das Sperrblech (3) der der Schaltschiene (1) für den nicht-synchronisierten Rückwärtsgang benachbarten Schaltschiene (2) eine Sperrnut (11) aufweist, die derart bemessen ist, dass das Ansynchronisieren des Vorwärtsganges in Rückwärtsgang-Schaltrichtung ohne Durchschalten ermöglicht wird.

4. Handschaltgetriebe nach einem der vorhergenden Ansprüche, **dadurch gekennzeichnet, dass** der Schaltschiene (1) für den nicht-synchronisierten Gang ein Rastenbolzen (5) zugeordnet ist, dessen beide Enden mit Steuerkonturen (6) versehen sind, die zum einen mit Steuerkonturen (7, 10) des Schaltmitnehmers (13) und zum anderen mit einer Steuerkontur des Rastenteils (3) zusammenwirken.

## Claims

1. Manual transmission for commercial vehicles with a multitude of synchronized forward gears and a nonsynchronized reverse gear and, optionally, featuring a nonsynchronized crawler gear, with the synchronization of the forward gears being performed by means of synchronizer packets arranged on shift rails, and with the shift rails having locking plates assigned to them to prevent simultaneous engagement of two forward gears, **characterized in that** the shift rail (1) for the nonsynchronized gear is provided with a detent (3) arranged in a manner suited for force-free engagement with the neighboring shift rail (2) for one of the synchronized forward gears when a nonsynchronized gear is selected, so that it is carried along in shifting direction and thereby causes the synchronizing process of the forward gear assigned to the neighboring shift rail (2) to be initiated without permitting this forward gear to be shifted through.

2. Manual transmission according to claim 1, **characterized in that** the detent (3) features an elastic element (9) and that the shift rail (2) is provided with a detent contour (4).

3. Manual transmission according to one of the preceding daims, **characterized in that** the locking plate (3) of the shift rail (2) adjacent to the shift rail (1) for the nonsynchronized reverse gear features a blocking groove (11) designed in a manner to permit initial synchronization of the forward gear in reverse-gear shifting-direction without the gear being shifted through.

4. Manual transmission according to one of the preceding claims, **characterized in that** a detent bolt (5) is assigned to the shift rail (1) for the nonsynchronized gear, both ends of which are provided with control contours (6) which cooperate with control contours (7, 10) of the driver (13) and with a control contour of the detent (3).

## Revendications

1. Boîte de vitesses manuelle pour véhicules utilitaires comportant une multitude de vitesses avant synchronisées et une marche arrière non synchronisée et, le cas échéant, une vitesse rampante non synchronisée, sachant que la synchronisation des vitesses avant est réalisée à l'aide d'ensembles de synchroniseurs disposés sur des glissières de commande et sachant qu'aux glissières de commande sont associées des tôles de verrouillage qui empêchent l'engagement de deux vitesses avant en même temps, **caractérisée en ce que** la glissière de commande (1) de la vitesse non synchronisée est dotée d'un élément cranté (3), celui-ci étant disposé de manière à ce que - lors de la sélection de la vitesse non synchronisée - il s'engrène sans effort dans la glissière de commande adjacente (2) d'une des vitesses avant synchronisées, de manière à ce que cette glissière de commande (2) est entraînée dans le sens de changement de vitesses ayant comme conséquence une synchronisation de la vitesse avant associée à la glissière de commande adjacente (2) tout en empêchant, toutefois, l'engagement de cette vitesse avant.

2. Boîte de vitesse manuelle selon la revendication 1, **caractérisée en ce que** l'élément cranté (3) est pourvu d'un élément élastique (9) et **en ce que** la glissière de commande (2) est dotée d'un profil cranté (4).

3. Boîte de vitesses manuelle selon une des revendications précédentes, **caractérisée en ce que** la tôle de verrouillage (3) de la glissière de commande (2) de la marche arrière non synchronisée et adjacente à la glissière de commande (1) comporte une gorge de verrouillage (11) qui est dimensionnée de manière à ce que la synchronisation de la vitesse avant dans le sens de changement de vitesses en marche arrière est possible sans passage de toutes les vitesses.

4. Boîte de vitesses manuelle selon une des revendications précédentes, **caractérisée en ce que** à la glissière de commande (1) de la vitesse non synchronisée est associé à un axe de verrouillage (5) dont les deux extrémités sont pourvues de profils de commande (6) qui agissent d'un côté conjointement avec les profils de commande (7, 10) de l'entraîneur de commande (13) et de l'autre côté conjointement avec un profil de commande de l'élément de verrouillage (3).
